## Europäisches Patentamt

## European Patent Office

## Office européen des brevets

(11) Numéro de publication: **0 165 091**
**B1**

(12) **FASCICULE DE BREVET EUROPEEN**

(45) Date de publication du fascicule du brevet: **04.04.90**

(21) Numéro de dépôt: **85400799.4**

(22) Date de dépôt: **24.04.85**

(51) Int. Cl.⁵: **A 01 J 25/08, A 01 J 25/12**

(54) Machine pour manutentionner des produits fragiles tels que du caillé utilisé dans la fabrication du fromage.

(30) Priorité: **04.05.84 FR 8406928**

(43) Date de publication de la demande:
**18.12.85 Bulletin 85/51**

(45) Mention de la délivrance du brevet:
**04.04.90 Bulletin 90/14**

(84) Etats contractants désignés:
**AT BE CH DE GB IT LI LU NL SE**

(56) Documents cités:
**CH-A- 405 808**
**DE-U-1 894 500**

(73) Titulaire: **Union des Coopératives Laitières d'ISIGNY-SUR-MER et de SAINTE-MERE-EGLISE (Union de Coopératives Agricoles)**
**2, rue du Docteur Boutrois**
**F-14230 Isigny-sur-Mer (FR)**

(72) Inventeur: **Chincholle, Roger**
**Rue du Commandant Kieffer**
**F-14450 Grandcamp Les Bains (FR)**
Inventeur: **Loyer, Alain**
**Villa Sophie Osmanville**
**F-14230 Osmanville (FR)**
Inventeur: **Dupont, Patrick**
**6, rue Holgate**
**F-50500 Carentan (FR)**

(74) Mandataire: **Lemoine, Robert et al**
**Cabinet Malémont 42, Avenue du Président Wilson**
**F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne une machine pour manutentionner des produits fragiles tels que du caillé utilisé dans la fabrication du fromage.

Le caillé est un produit très fragile qui doit être manipulé avec beaucoup de précaution pour que la qualité du fromage résultant soit irréprochable. C'est précisément pour tenir compte de cet impératif que son introduction dans le moules à fromage est parfois encore assurée manuellement, selon la technique dite du moulage à la louche.

Cette technique ne donne toutefois pas entière satisfaction. Elle est en effet très lente, ce qui entraîne une mauvaise productivité et des coûts de fabrication importants. Elle est en outre pénible car les salles de production sont maintenues à une température de l'ordre de 27 à 30°C. Il est par ailleurs très difficile de recruter une main-d'oeuvre sérieuse acceptant les contraintes qu'elle impose.

La présente invention se propose de remédier aux inconvénients de la technique du moulage à la louche tout en en conservant les avantages et, pour ce faire, elle a pour objet une machine qui se caractérise en ce qu'elle comprend un plateau horizontal relié à un support déplaçable verticalement et horizontalement, au moins une calotte hémisphérique ou sensiblement hémisphérique suspendue au plateau avec son entrée tournée vers le bas, un volet de forme semblable à la calotte et articulé sur celle-ci autour de deux pivots diamétralement opposés prévus à l'entrée de celle-ci, ce volat étant déplaçable entre une position fermée dans laquelle il s'étend sous la calotte tandis que son entrée est tournée vers le haut et une position ouverte dans laquelle il recouvre la calotte tandis que son entrée est tournée vers le bas, et des moyens pour déplacer le volet entre ses positions ouverte et fermée.

Cette machine permet de manutentionner le caillé avec précaution et délicatesse, ce qui réduit la proportion des fromages déclassés pour brisures et écrassement. Elle permet en outre une meilleure productivité et contribue par conséquent à abaisser les coûts de fabrication.

Selon un premier mode de réalisation de l'invention, le volet est constitué de deux parties symétriques par rapport au plan médian de la calotte qui passe par les deux pivots.

Selon ce mode de réalisation, les moyens pour déplacer le volet entre ses positions ouverte et fermée comprennent de préférence une tige disposée verticalement au-dessus du sommet de la calotte et pourvue à sa partie inférieure d'une chape portant un axe parallèle aux deux pivots, deux leviers articulés sur l'axe de la chape et dont les extrémités inférieures sont reliées aux deux parties du volet respectivement par deux axes disposés symétriquement par rapport à l'axe des deux pivots, et des moyens pour déplacer la tige par rapport au plateau entre une position basse dans laquelle le volet est dans sa position fermée et une position haute dans laquelle le volet est dans sa position ouverte.

Avantageusement, les extrémités supérieures des leviers se prolongent au-dessus de l'axe de la chape et portent chacune un tampon élastique apte à être comprimé contre une butée portée par la tige, lorsque celle-ci est dans sa position haute.

Les tampons élastiques évitent que volet reste intempestivement dans sa position ouverte lorsque la tige se déplace vers sa position basse et augmentent par conséquent la sécurité de fonctionnement de la machine.

De préférence, la tige est reliée à une console horizontale située au-dessus du plateau et déplaçable verticalement par rapport à celui-ci sous la commande d'un organe moteur.

L'ouverture et la fermeture du volet peuvent ainsi être assurées en déplaçant la console par rapport au plateau, ce qui peut être réalisé de façon simple, par exemple à l'aide de vérins hydrauliques ou pneumatiques, de systèmes bielle-manivelle, etc...

Selon un second mode de réalisation de l'invention, les moyens pour déplacer le volet entre ses positions ouverte et fermée comprennent une tige verticale dont l'extrémité inférieure est reliée à l'entrée du volet par un axe parallèle aux deux pivots et équidistants de ceux-ci, deux biellettes parallèles situées l'une au-dessus de l'autre, ces biellettes étant montées rotatives autour de deux axes horizontaux s'étendant au-dessus des pivots et étant reliées chacune à pivotement à la tige, et des moyens de commande pour faire tourner alternativement les biellettes d'environ 180° dans chaque sens de manière à déplacer alternativement le volet de sa position ouverte à sa position fermée.

Selon ce second mode de réalisation, les axes de rotation des biellettes sont portés par des supports fixés au plateau, de part et d'autre de celui-ci.

Par ailleurs, les moyens de commande comprennent deux pignons identiques calés sur les axes de rotation des biellettes, un pignon intermédiaire calé sur le plateau et en prise avec les deux pignons, et des moyens pour relier en rotation l'un des pignons a un organe moteur.

Selon une caractéristique particulièrement avantageuse de l'invention, la calotte comporte au moins un évent à sa partie supérieure.

L'air contenu dans la calotte peut ainsi s'échapper librement pendant que celle-ci est immergée dans le caille. Les quantités prélevées de caille peuvent donc être égales au volume total mélangé par la calotte et le volet, ce qui permet d'améliorer encore le rendement de la machine.

Selon une autre caractéristique de l'invention, la calotte renferme des plaques parallèles en contact avec sa surface intérieure et conformées pour l'être avec celle du volet lorsque celui-ci est dans sa position fermée.

Ces plaques, qui fractionnent le produit lors du prélèvement, sont particulièrement utiles car elles facilitent l'exsudation du sérum après l'introduction du caillé dans les moules.

Deux modes d'exécution de la présente seront décrits ci-après à titre d'exemples nullement limitatifs en référence aux dessins annexés dans lesquels:

— la figure 1 est une vue de face d'une machine conforme à l'invention, les volets des quatre calottes visibles sur cette figure étant représentés en position fermée;

— la figure 2 est une vue de côté, partielle et avec arrachement, de la machine visible sur la figure 1;

— la figure 3 est une vue en coupe effectuée selon la ligne III—III de la figure 2;

— la figure 4 est une vue analogue à la figure 3, mais dans laquelle le volet est représenté en position ouverte;

— la figure 5 représente une variante de réalisation d'un volet et des moyens de commande de celui-ci;

— la figure 6 est une vue en coupe effectué selon la tige VI—VI de la figure 5; et

— la figure 7 est une vue analogue à la figure 6, mais montrant le volet en position ouverte.

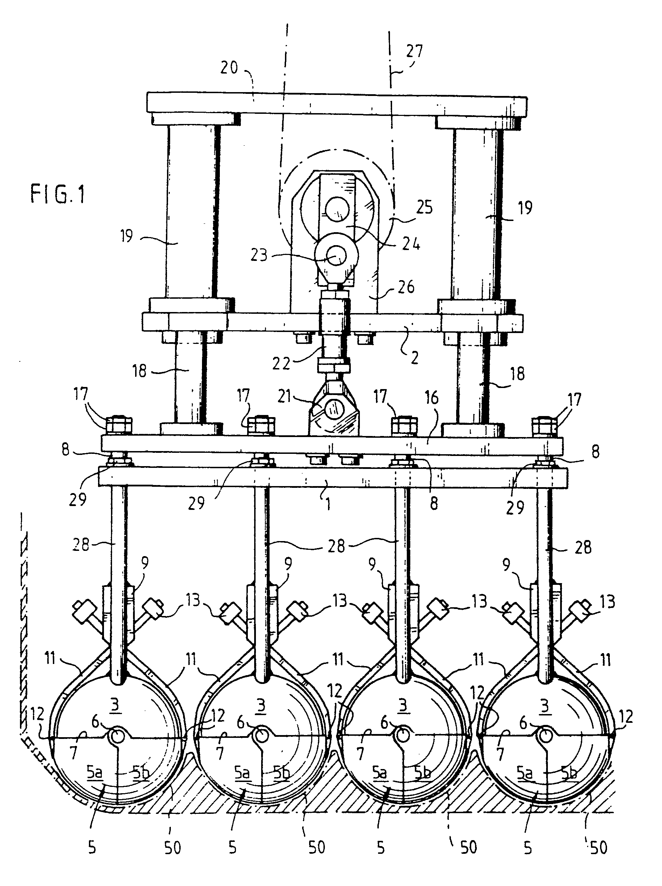

La machine conforme à l'invention est plus particulièrement destinée à prélever du caillé élaboré dans une bassine telle que celle représentée en traits mixtes sur la figure 1, à amener le caillé prélevé au-dessus de moules à fromage non représentés et à le déposer délicatement dans ceux-ci. Elle pourrait toutefois être utilisée pour manutentionner d'autres produits se présentant sous la forme de poudre, de granulés, de pâte, etc. . . .

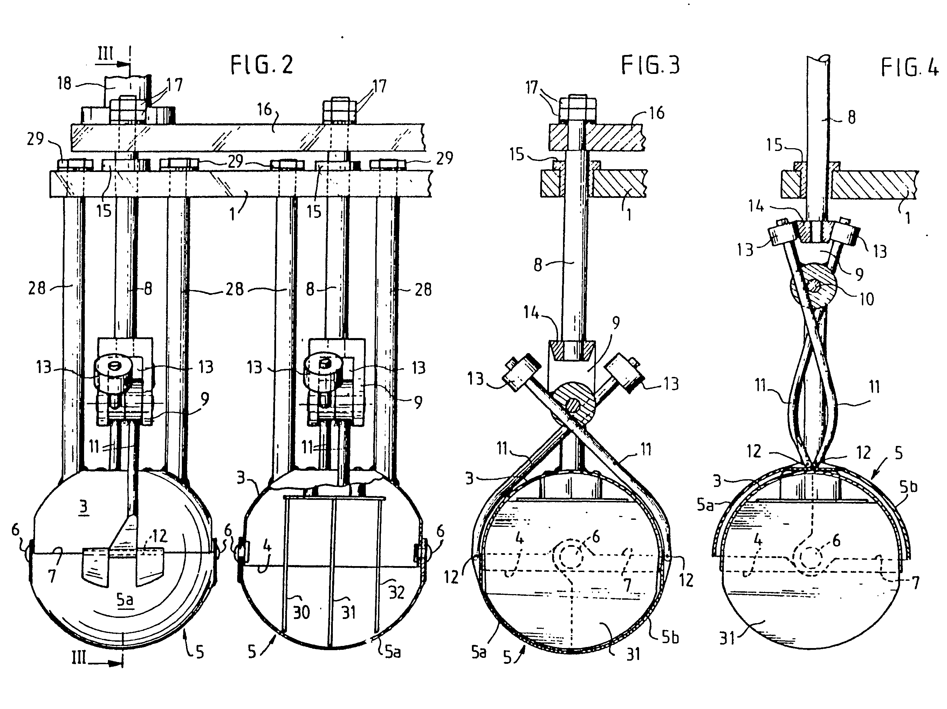

La machine que l'on peut voir sur les figures 1 à 4 comprend un plateau horizontal 1 relié d'une manière qui apparaîtra clairement ci-dessous à un support 2 solidaire d'un chariot non représenté déplaçable aussi bien verticalement qu'horizontalement. Elle comporte également un certain nombre de calottes hémisphériques 3 réparties en rangées, ces calottes étant suspendues au plateau 1 de telle sorte que leur entrée 4 (visibile sur les figures 2 à 4) soit tournée vers le bas.

Dans le mode de réalisation envisagé ici, le plateau supporte quatre rangées de calottes comportant chacune cinq calottes identiques. Il va de soi cependent que le nombre et la répartition des calottes pourraient être différents sans pour autant que l'on sorte du cadre de la présente invention.

Chaque calotte 3 comporte un volet 5 de forme hémisphérique, articulé autour de deux pivots 6 prévus en deux points diamétralement opposés de son entrée 4 et constitué de deux parties 5a, 5b symétriques par rapport au plan vertical passant par les deux pivots précités.

Les volets 5 sont déplaçables entre une position fermée (visible sur les figures 1 à 3) dans laquelle ils s'étendent sous la calotte sur laquelle ils sont articulés, leur entrée 7 étant tournée vers le haut, et une position ouverte (visible sur la figure 4) dans laquelle ils recouvrent la calotte en cause, leur entrée 7 étant alors tournée vers le bas. Chacun d'eux est commandé par des moyens comprenant une tige 8 (particulièrement bien visible sur les figures 2 à 4) disposée verticalement au-dessus du sommet de la calotte correspondante 3 et pourvue à sa partie inférieure d'une chape 9 portant un axe 10 parallèle aux pivots 6, deux leviers 11 articulés sur l'axe 10 et dont les extrémités inférieures sont reliées aux deux parties correspondantes 5a, 5b, respectivement par deux axes parallèles 12 s'étendant symétriquement par rapport à l'axe des deux pivots correspondants 6, et des moyens pour déplacer la tige 8 par rapport au plateau 1 entre une position basse visibile sur les figures 1 à 3 et dans laquelle elle maintient le volet correspondant dans sa position fermée et une position haute visible sur la figure 4 et dans laquelle elle maintient le volet dans sa position ouverte.

Les deux leviers il reliés à un même volet sont cintrés au voisinage de leur extrémité inférieure pour tenir compte du fait que les axes 12 sont adjacents à l'entrée 7 de ce volet. Quant à leur extrémité supérieure, elle se prolonge au-dessus de l'axe 10 de la chape correspondante 9 et se termine par un tampon élastique 13. Lorsque la tige 8 est dans sa position haute, comme représenté sur la figure 4, les tampons 13 viennent contre une butée 14 prévue à l'intérieur de la chape 9 et soumettent les deux leviers associés 11 à une légère déformation élastique grâce à laquelle le volet ne risque pas de rester overt lors du retour de la tige 8 dans sa position basse.

Comme le montrent les figures 3 et 4, les tiges 8 sont montées coulissantes dans des manchons 15 retenus dans des perçages réalisés dans le plateau 1 et sont toutes reliées à une console horizontale 16 située au-dessus de celui-ci, leur extrémité supérieure comportant une partie filetée se prolongeant au-dessus de la face supérieure de la console et recevant deux écrous de blocage 17.

Comme le montre par ailleurs la figure 1, la console 16 est fixée à l'extrémité inférieure de colonnes 18, par exemple au nombre de quatre, faisant saillie sous le support 2, ces colonnes étant montées coulissantes dans des manchons de guidage 19 dont l'extrémité inférieure est fixée contre la face supérieure du support 2 et dont l'extrémité supérieure est fixée contre la face inférieure d'une plaque 20 parallèle au support 2.

Sur sa face supérieure, la console 16 porte par ailleurs une chape centrale 21 sur laquelle est articulée l'une des extrémités d'une bielle 22 traversant le support 2, cette bielle étant articulée à son autre extrémité sur un maneton 23 porté par un bras 24 solidaire en rotation d'une poulie 25 qui est montée rotative dans une chape 26 fixée sur la face supérieure du support 2 et qui est reliée par une courroie 27 à un organe moteur non représenté.

Lorsque la bielle 22 et le bras 23 s'étendent verticalement, comme représenté sur la figure 1, il suffit bien entendu de faire tourner la poulie 25 de 180° pour déplacer la console 16 de sa position basse représentée sur les figures 1 à 3 à sa position haute représentée sur la figure 4 et permettre aux tiges 8 de déplacer l'ensemble des volets 5 de leur position fermée à leur position ouverte.

Il va de soi que la mécanisme prévu sur les dessins pour déplacer la console pourrait être remplacé par au moins un vérin hydraulique ou pneumatique, ou par tout autre organe de commande susceptible de déplacer alternativement la console entre ses deux positions extrêmes.

En se référant plus particulièrement à la figure 2, on remarquera maintenant que chacune des calottes 3 est reliée au plateau 1 par deux colonnes verticales 28 disposées symétriquement par rapport à la tige correspondante 8, l'extrémité inférieure de ces deux colonnes étant soudée à la calotte tandis que leur extrémité supérieure comporte une partie filetée se prolongeant au-dessus de la face supérieure du plateau et recevant un écrou de serrage 29.

On remarquera également que les calottes 3 renferment trois plaques parallèles 30, 31, 32 en contact avec leur surface intérieure et conformées pour l'être avec celle du volet correspondant 5 lorsque celui-ci est dans sa position fermée. Ces plaques, qui sont de préférence amovibles, sont destinées à fractionner le produit lors de son prélèvement, et plus précisément à favoriser l'exsudation du sérum contenu dans le caillé lorsque la machine conforme à l'invention est utilisée pour la fabrication de fromage.

Pour transférer dans des moules à fromage le caillé contenu dans une bassine telle que celle représentée en traits mixtes sur la figure 1, on procède de la façon suivante:

— on ouvre les volets 5 en faisant tourner la poulie 25 de 180° à partir de sa position représentée sur la figure 1;

— on commande judicieusement le chariot (non représenté) portant le support 2 pour amener les calottes 3 au-dessus de la bassine puis pour les enfoncer dans le caillé;

— on ferme les volets 5 à l'intérieur du caillé en faisant tourner à nouveau la poulie 25 de 180°;

— on commande judicieusement le chariot pour extraire les calottes de la bassine et les amener juste au-dessus du fond des moules à fromage;

— on ouvre les volets 5 pour déverser en douceur le caillé dans les différents moules; et

— on commande à nouveau le chariot de façon à ramener les calottes 3 au-dessus de la bassine, afin de recommencer un nouveau cycle de prélèvement.

Le fonctionnement de la machine pourrait bien entendu être entièrement automatisé. Ainsi, des moyens pourraient être prévus pour régler continuellement la profondeur d'immersion des calottes dans la bassine afin de tenir compte de la diminution du niveau du caillé. De même, des moyens pourraient être prévus pour évacuer les moules remplis de caillé et les remplacer par des moules vides.

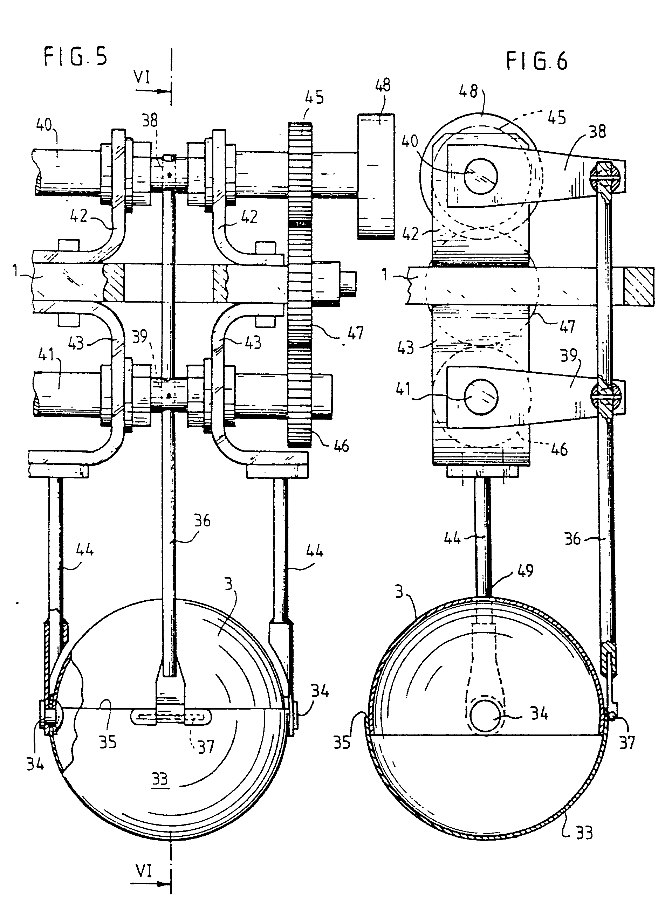

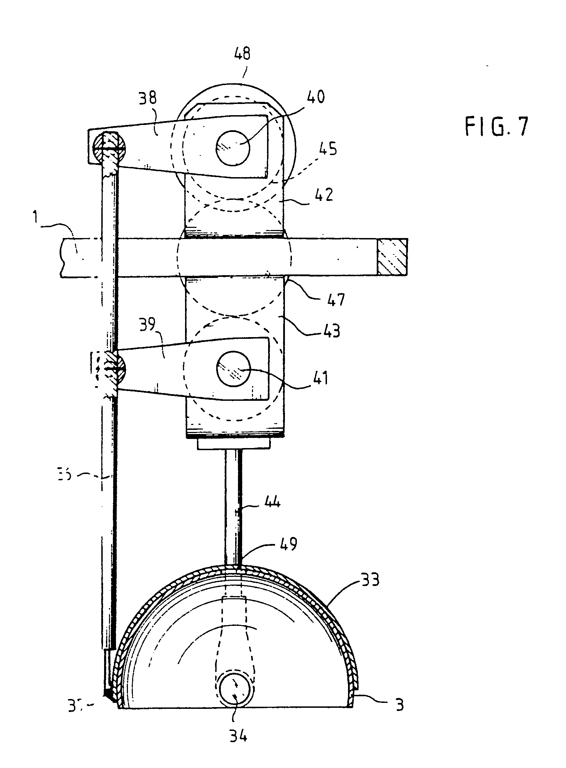

Les figures 5 à 7 montrent une calotte hémisphérique 3 comportant un volet hémisphérique 33 d'une seule pièce. Ce volet est articulé autour de deux pivots 34 prévus en deux points diamétralement opposés de son entrée 35, ce qui permet de le déplacer entre une position fermée (visible sur les figures 5 et 6) dans laquelle il s'étend sous la calotte 3 tandis que son entrée est tournée vers le haut, et une position ouverte (visible sur la figure 7) dans laquelle il recouvre la calotte tandis que son entrée est tournée vers le bas.

Les moyens prévus pour déplacer le volet 33 entre ses positions ouverte et fermée comprennent une tige verticale 36 dont extrémité inférieure est reliée au voisinage de son entrée 35 par un axe 37 parallèle aux deux pivots 34 et équidistants de ceux-ci, deux biellettes parallèles 38, 39 situées l'une au-dessus de l'autre, ces biellettes étant montées rotatives autour de deux axes horizontaux 40, 41 s'étendant au-dessus des pivots 34, et étant reliées chacune à pivotement à la tige 36, et des moyens de commande pour faire tourner alternativement les biellettes d'environ 180° dans chaque sens.

Dans le mode de réalisation représenté, les axes 40, 41 sont portés par des supports supérieurs 42 et inférieurs 43 fixée respectivement sur les faces supérieure et inférieure du plateau 1. En outre, la calotte 3 est reliée aux supports inférieurs 43 par deux colonnes verticales 44 portant les pivots 34 à leur extrémité inférieure.

Quant aux moyens de commande des biellettes 38, 39, ils comprennent deux pignons identiques 45, 46 calés sur les axes 40, 41, un pignon intermédiaire 47 calé sur le plateau 1 et engrenant avec les deux pignons 45, 46, une poulie 48 coaxiale avec et solidaire en rotation du pignon 45, et une transmission non représentée reliant la poulie 48 à un organe moteur également non représenté.

Pour être complet, on notera que dans le mode de réalisation représenté sur les figures 5 à 7, la calotte 3 comporte à sa partie supérieure un évent 49 premettant à l'air qu'elle renferme de s'échapper lors du prélèvement du caillé.

On notera enfin que la présente invention concerne également une bassine permettant de prélever pratiquement tout le caillé qu'elle contient, cette bassine se caractérisant essentiellement en ce que son fond comporte des dépressions sensiblement hémisphériques, telles que celles représentées en 50 sur la figure 1 et dont la répartition correspond à celle des calottes 3 suspendues au plateau 1.

## Revendications

1. Machine pour manutentionner des produits fragiles tels que du caillé utilisé dans la fabrication du fromage, caractérisée en ce qu'elle comprend un plateau horizontal (1) relié à un support (2) déplaçable verticalement et horizontalement, au moins une calotte hémisphérique ou sensiblement hémisphérique (3) suspendue au plateau (1) avec son entrée (4) tournée vers le bas, un volet de forme semblable (5; 33) à la calotte (3) et articulé sur celle-ci autour de deux pivots diamétralement opposés (6; 34) prévus à l'entrée (4) de celle-ci, ce volet (5; 33) étant déplaçable entre une position fermée dans laquelle il s'étend sous la calotte (3) tandis que son entrée (7; 35) est tournée vers le haut et une position ouverte dans laquelle il recouvre la calotte (3) tandis que son entrée (7; 35) est tournée vers le bas, et des moyens pour déplacer le volet (5; 33) entre ses positions ouverte et fermée.

2. Machine selon la revendication 1, caractérisée en ce que le volet (5) est constitué de deux parties (5a, 5b) symétriques par rapport au plan médian de la calotte (3) qui passe par les deux pivots (6).

3. Machine selon la revendication 2, caractérisée en ce que les moyens pour déplacer le volet (5) entre ses positions ouverte et fermée comprennent une tige (8) disposée verticalement au-dessus du sommet de la calotte (3) et pourvue à sa partie inférieure d'une chape (9) portant un axe (10) parallèle aux deux pivots (6), deux leviers (11) articulés sur l'axe (10) de la chape (9) et dont les extrémités inférieures sont reliées aux deux parties (5a, 5b) du volet, respectivement par deux axes (12) disposés symétriquement par rapport à l'axe des deux pivots (6), et des moyens pour déplacer la tige (8) par rapport au plateau (1) entre une position basse dans laquelle le volet (5) est dans sa position fermée et une position haute dans laquelle le volet (5) est dans sa position ouverte.

4. Machine selon la revendication 3, caractérisée en ce que les extrémités supérieures des leviers (11) se prolongent au-dessus de l'axe (10) de la chape (9) et portent chacune un tampon élastique (13) apte à être comprimé contre une butée (14) portée par la tige (8), lorsque celle-ci est dans sa position haute.

5. Machine selon la revendication 3 ou 4, caractérisée en ce que la calotte (3) est reliée au plateau (1) par deux colonnes (28) disposées symétriquement par rapport à la tige (8).

6. Machine selon l'une quelconque des revendications 3 à 5, caractérisé en ce que la tige (8) est reliée à une console horizontale (16) située au-dessus du plateau (1) et déplaçable verticalement par rapport à celui-ci sous la commande d'un organe moteur.

7. Machine selon la revendication 1, caractérisée en ce que les moyens pour déplacer le volet (33) entre ses positions ouverte et fermée comprennent une tige verticale (36) dont l'extrémité inférieure est reliée à l'entrée (35) du volet (33) par un axe (37) parallèle aux deux pivots (34) et équidistants de ceux-ci, deux biellettes parallèles (38, 39) situées l'une au-dessus de l'autre, ces biellettes étant montées rotatives autour de deux axes horizontaux (40, 41) s'étendant au-dessus des pivots (34) et étant reliées chacune à pivotement à la tige (36), et des moyens de commande pour faire tourner alternativement les biellettes (38, 39) d'environ 180° dans chaque sens de manière à déplacer alternativement le volet (33) de sa position ouverte à sa position fermée.

8. Machine selon la revendication 7, caractérisée en ce que les axes de rotation (40, 41) des biellettes (38, 39) sont portés par des supports (42, 43) fixés au plateau (1), de part et d'autre de celui-ci.

9. Machine selon la revendication 8, caractérisée en ce que les moyens de commande comprennent deux pignons identiques (45, 46) calés sur les axes de rotation (40, 41) des biellettes (38, 39), un pignon intermédiaire (47) calé sur le plateau (1) et enprise avec les deux pignon (45, 46) et des moyens (48) pour relier en rotation l'un des pignons (45, 46, 47) à un organe moteur.

10. Machine selon l'une quelconque des revendications précédentes, caractérisée en ce que la calotte (3) comporte au moins un évent (49) à sa partie supérieure.

11. Machine selon l'une quelconque des revendications précédentes, caractérisée en ce que la calotte (3) renferme des plaques parallèles (30, 31, 32) en contact avec sa surface intérieure et conformées pour l'être avec celle du volet (5; 33) lorsque celui-ci est dans sa position fermée.

12. Machine selon l'une quelconque des revendications précédentes, utilisée en combinaison avec une bassine comportant un fond dans lequel sont ménagées des dépressions (50) dont la répartition correspond à celle des calottes (3) suspendues au plateau (1).

13. Combinaison selon la revendication 12, caractérisée en ce que la bassine comporte un fond dans lequel sont ménagées des dépressions (50), de préférence hémisphériques ou sensiblement hémisphériques.

**Patentansprüche**

1. Maschine zum Handhaben zerbrechlicher Produkte, wie Käsebruch bei der Herstellung von Käse, dadurch gekennzeichnet, daß sie beinhaltet: eine horizontale Platte (1), die mit einer vertikal und horizontal verstellbaren Halterung (2) verbunden ist, wenigstens eine halbkugelförmige oder etwa halbkugelförmige Kalotte (3), die an der Platte (1) mit ihrer Öffnung (4) nach unten aufgehängt ist, ein in der Form der Kalotte (3) ähnliche Klappe (5; 33), die mit dieser um zwei einander gegenüber an deren Öffnung (4) angeordneten Drehzapfen (6; 34) beweglich verbunden ist und die zwischen einer Schließstellung, in der sie sich bei nach oben gedrehter Öffnung (7; 35) unter der Kalotte (3) befindet, und einer Öffnungsstellung verstellbar ist, in der sie bei nach unten gedrehter Öffnung (7; 35) die Kalotte (3) überdeckt, und Mittel zum Verstellen der Klappe (5; 35) zwischen ihren Schließ- und Öffnungsstellungen.

2. Maschine nach Anspruch 1, dadurch gekennzeichnet, daß die Klappe (5) aus zwei in Bezug auf die durch die beiden Drehzapfen (6) verlaufende Mittelebene der Kalotte (3) symmetrischen Teilen (5a, 5b) gebildet ist.

3. Maschine nach Anspruch 2, dadurch gekennzeichnet, daß die Mittel zum Verstellen der Klappe (5) zwischen ihren Schließ- und Öffnungsstellungen eine Stange (8) beinhalten, die senkrecht über dem höchsten Punkt der Kalotte (3) angeordnet und an ihrem unteren Teil mit einer Gabel (9) versehen ist, die eine den beiden Drehzapfen (6) parallele Achse (10) trägt, mit der zwei Hebel (11) beweglich verbunden sind, deren untere Enden mit den zwei Teilen (5a, 5b) der Klappe durch zwei Achsen (12) verbunden sind, die in Bezug auf die Achse der beiden Drehzapfen (6) symmetrisch angeordnet sind, und daß Mittel zum Verstellen der Stange (8) in Bezug auf die Platte (1) zwischen einer Tiefstellung, in der die Klappe in ihrer Schließstellung ist, und einer Hochstellung vorhanden ist, in der die Klappe (5) in ihrer Öffnungsstellung ist.

4. Maschine nach Anspruch 3, dadurch gekennzeichnet, daß sich die oberen Enden der Hebel (11) über die Achse (10) der Gabel (9) fortsetzen und jeweils einen elastischen Puffer (13) tragen, der gegen einen von der Stange (8) getragenen Anschlag (14) drückbar ist, wenn sich diese in ihrer Hochstellung befindet.

5. Maschine nach Anspruch 3 oder 4, dadurch gekennzeichnet, daß die Kalotte (3) mit der Platte (1) durch zwei in Bezug auf die Stange (8) symmetrische Säulen (28) verbunden ist.

6. Maschine nach irgendeinem der Anspüche 3 bis 5, dadurch gekennzeichnet, daß die Stange (8) mit einer horizontalen Konsole (16) verbunden ist, die oberhalb der Platte (1) angeordnet und in Bezug auf diese von einem Antriebselement vertikal verstellbar ist.

7. Maschine nach Anspruch 1, dadurch gekennzeichnet, daß die Mittel zum Verstellen der Klappe (33) zwischen ihren Schließ- und Öffnungsstellungen eine vertikale Stange (36) beinhalten, deren unteres Ende mit der Öffnung (35) de Klappe (33) durch eine zu den beiden Drehzapfen (34) parallele und äquidistante Achse (37) verbunden ist, und daß zwei parallele übereinander angeordnete Schwingarme (38, 39) vorhanden sind, die um zwei horizontale Achsen (40, 41) drehbar oberhalb der Drehzapfen (34) angeordnet und schwenkbar mit der Stange (36) verbunden sind, und daß Steuermittel zum abwechselnden Drehen der Schwingarme (38, 39) um etwa 180° in jeder Richtung zum abwechselnden Verstellen der Klappe (33) von ihrer Öffnungsstellung in ihre Schließstellung vorhanden ist.

8. Maschine nach Anspruch 7, dadurch gekennzeichnet, daß die Drehachsen (40, 41) der Schwingarme (38, 39) durch Träger (42, 43) getragen und an der Platte (1) zu beiden Seiten befestigt sind.

9. Maschine nach Anspruch 8, dadurch gekennzeichnet, daß die Steuermittel beinhalten: zwei identische, auf den Drehachsen (40, 41) der Schwingarme (38, 39) festsitzende Zahnräder (45, 46), ein an der Platte (1) befestigtes und mit den beiden Zahnrädern (45, 46) in Eingriff befindliches Zwischenzahnrad (47), und Mitteln (48), um eins der Zahnräder (45, 46, 47) mit einem Antriebselement in Drehung zu versetzen.

10. Maschine nach irgendeinem der vorhergehenden Ansprüche, dadurch gekennzeichnet, daß die Kalotte (3) in ihrem oberen Teil wenigstens ein Luftloch (49) hat.

11. Maschine nach irgendeinem der vorhergehenden Ansprüche, dadurch gekennzeichnet, daß die Kalotte (3) parallele Tafeln (30, 31, 32) hat, die in Kontakt mit ihrer Innenfläche stehen und sich nahe an der Innenfläche der Klappe (5; 33) befinden, wenn diese in ihrer Schließstellung ist.

12. Maschine nach irgendeinem der vorhergehenden Ansprüche, verwendet mit einer Wanne, die einen Boden hat, in dem Mulden (50) angeordnet sind, deren Verteilung derjenigen der an der Platte (1) aufgehängten Kalotten (3) entspricht.

13. Kombination nach Anspruch 12, dadurch gekennzeichnet, daß die Wanne einen Boden hat, in dem vorzugsweise halbkugelförmige oder etwa halbkugelförmige Mulden (50) vorhanden sind.

**Claims**

1. A machine for handling fragile products such as curd used in the production of cheese, characterized in that it comprises a horizontal table (1) connected to a support (2) movable vertically and horizontally, at least one hemispherical or subtantially hemispherical cap (3) hanging from the table (1) with its inlet (4) facing downwards, a flap (5; 33) shaped similarly to the cap (3) and articulated thereon around two diametrally opposed pivots (6; 34) provided at the inlet (4) thereof, said flap (5; 33) being movable between a closed position in which it extends under the cap (3) with its inlet (7; 35) facing upwards and an open position in which it covers the cap (3) with its inlet (7; 35) facing downwards, and means for moving the flap (5; 33) between its open and closed positions.

2. The machine according to claim 1, characterized in that the flap (5) comprises two parts (5a, 5b) symmetrical with respect to the center plane of the cap (3) passing through the two pivots (6).

3. The machine according to claim 2, characterized in that the means for moving the flap (5) between its open and closed positions comprise a rod (8) arranged vertically above the top of the cap (3) and provided at its lower part with a fork (9) bearing an axis (10) parallel to the two pivots (6), two levers (11) articulated on the axis (10) of the fork (9) and having their lower ends connected to the two parts (5a, 5b) of the flap respectively by two axes (12) arranged symmetrically relative to the axis of the two pivots (6), and means for moving the rod (8) with respect to the table (1) between a low position in which the flap (5) is in its closed position and a high position in which the flap (5) is in its open position.

4. The machine according to claim 3, characterized in that the upper ends of the levers (11) project above the axis (10) of the fork (9) and bear respectively an elastic pad (13) which can be pressed against a stop (14) on the rod (8), when the latter is in its high position.

5. The machine according to claim 3 or 4, characterized in that the cap (3) is connected to the table (1) through two columns (28) arranged symmetrically relative to the rod (8).

6. The machine according to any of claims 3 to 5, characterized in that the rod (8) is connected to a horizontal bracket (16) located over the table (1) and movable vertically relative thereto under the control of an actuator.

7. The machine according to claim 1, characterized in that the means for moving the flap (33) between its open and closed positions comprise a vertical rod (36) the lower end of which is connected to the inlet (35) of the flap (33) through an axis (37) parallel to the two pivots (34) and spaced at equal distance therefrom, two parallel links (38, 39) disposed one above the other, said links being mounted rotatably around two horizontal axes (40, 41) which extend above the pivots (34), and being each pitovally coupled with the rod (36), and control means for rotating alternately the links (38, 39) approximately 180° in each direction, in order to move alternately the flap (33) from its open position to its closed position.

8. The machine according to claim 7, characterized in that the rotation axes (40, 41) of the links (38, 39) are carried by supports (42, 43) attached to the table (1) on either side thereof.

9. The machine according to claim 8, characterized in that the control means comprise two identical gear wheels (45, 46) set on the rotation axes (40, 41) of the links (38, 39), one intermediate wheel (47) set on the table (1) and engaged with the two gear wheels (45, 46), and means (48) for rotatably connecting one of said wheels (45, 46, 47) to an actuator.

10. The machine according to any of the preceding claims, characterized in that the cap (3) comprises at least one vent hole (49) at the upper part thereof.

11. The machine according to any of the preceding claims, characterized in that the cap (3) encloses parallel plates (30, 31, 32) contacting its inner surface and shaped to be in contact with the inner surface of the flap (5; 33) when the latter is in its closed position.

12. The machine according to any of the preceding claims, used in combination with a pan having a bottom with depressions (50) provided therein, the distribution of which corresponds to that of the caps (3) hanging from the table (1).

13. The combination according to claim 12, characterized in that the pan has a bottom with depressions (50) provided therein, which are hemispherical or substantially hemispherical.

FIG.1

FIG.4

FIG.3

FIG.2

FIG.5

FIG.6

FIG. 7